Europäisches Patentamt

European Patent Office

Office européen des brevets

(19)

(11) **EP 1 034 631 B1**

(12) **EUROPÄISCHE PATENTSCHRIFT**

(45) Veröffentlichungstag und Bekanntmachung des Hinweises auf die Patenterteilung:
**27.02.2002 Patentblatt 2002/09**

(21) Anmeldenummer: **98959761.2**

(22) Anmeldetag: **27.10.1998**

(51) Int Cl.$^7$: **H04B 17/00**

(86) Internationale Anmeldenummer:
**PCT/DE98/03146**

(87) Internationale Veröffentlichungsnummer:
**WO 99/30447 (17.06.1999 Gazette 1999/24)**

(54) **VERFAHREN UND MESSANORDNUNG ZUR MESSUNG DER EIGENSCHAFTEN VON FUNKKANÄLEN**

METHOD AND MEASURING DEVICE TO MEASURE THE CHARACTERISTICS OF RADIO CHANNELS

PROCEDE ET DISPOSITIF POUR MESURER LES CARACTERISTIQUES DE VOIES DE RADIOCOMMUNICATION

(84) Benannte Vertragsstaaten:
**DE FR GB IT**

(30) Priorität: **05.12.1997 DE 19754030**

(43) Veröffentlichungstag der Anmeldung:
**13.09.2000 Patentblatt 2000/37**

(73) Patentinhaber: **SIEMENS AKTIENGESELLSCHAFT
80333 München (DE)**

(72) Erfinder:
• **BRUNNER, Christopher
D-80798 München (DE)**
• **HAARDT, Martin
D-81477 München (DE)**

(56) Entgegenhaltungen:
**DE-A- 19 511 752**

• **HAARDT M ET AL: "Efficient high-resolution 3-D channel sounding" VTC '98. 48TH IEEE VEHICULAR TECHNOLOGY CONFERENCE. PATHWAY TO GLOBAL WIRELESS REVOLUTION (CAT. NO.98CH36151), VTC '98. 48TH IEEE VEHICULAR TECHNOLOGY CONFERENCE. PATHWAY TO A GLOBAL WIRELESS REVOLUTION, OTTAWA, ONT., CANADA, 18-21 MAY 1998, Seiten 164-168 vol.1, XP002097969 ISBN 0-7803-4320-4, 1998, New York, NY, USA, IEEE, USA**

• **HAARDT M ET AL: "3-D unitary ESPRIT for joint 2-D angle and carrier estimation" 1997 IEEE INTERNATIONAL CONFERENCE ON ACOUSTICS, SPEECH, AND SIGNAL PROCESSING (CAT. NO.97CB36052), 1997 IEEE INTERNATIONAL CONFERENCE ON ACOUSTICS, SPEECH, AND SIGNAL PROCESSING, MUNICH, GERMANY, 21-24 APRIL 1997, Seiten 255-258 vol.1, XP002097970 ISBN 0-8186-7919-0, 1997, Los Alamitos, CA, USA, IEEE Comput. Soc. Press, USA**

• **FUHL J ET AL: "HIGH-RESOLUTION 3-D DIRECTION-OF-ARRIVAL DETERMINATION FOR URBAN MOBILE RADIO" IEEE TRANSACTIONS ON ANTENNAS AND PROPAGATION, Bd. 45, Nr. 4, April 1997, Seiten 672-682, XP000686403 in der Anmeldung erwähnt**

• **HAARDT M ET AL: "2D UNITARY ESPRIT FOR EFFICIENT 2D PARAMETER ESTIMATION" PROCEEDINGS OF THE INTERNATIONAL CONFERENCE ON ACOUSTICS, SPEECH, AND SIGNAL PROCESSING (ICASSP), DETROIT, MAY 9 - 12, 1995 STATISTICAL SIGNAL AND ARRAY PROCESSING, Bd. 3, Nr. CONF. 20, 9. Mai 1995, Seiten 2096-2099, XP002009163 INSTITUTE OF ELECTRICAL AND ELECTRONICS ENGINEERS**

- **ROY R ET AL: "ESPRIT-ESTIMATION OF SIGNAL PARAMETERS VIA ROTATIONAL INVARIANCE TECHNIQUES" IEEE TRANSACTIONS ON ACOUSTICS, SPEECH AND SIGNAL PROCESSING, Bd. 37, Nr. 7, Juli 1989, Seiten 984-995, XP000037318 in der Anmeldung erwähnt**

**Beschreibung**

Die Erfindung bezieht sich auf ein Verfahren zur Messung der Eigenschaften von Funkkanälen, bei welchem die Signale einer Anzahl von Empfangssensoren einer zweidimensionalen Antennengruppe empfangen werden, wobei sich die Empfangssignale je aus Teilwellen eines Sendesignales hinsichtlich Azimuth und Elevation unterschiedlicher zweidimensionaler Einfallsrichtung und unterschiedlicher Verzögerung zusammensetzen.

Weiters bezieht sich die Erfindung auf eine Meßanordnung zur Messung von Eigenschaften von Funkkanälen mit einer ebenen Antennengruppe mit einer Anzahl von Antennensensoren, wobei jedem Antennensensor eine Analog-Digital-Abtastung, ein signalangepaßtes Filter sowie eine Stufe zur diskreten Fouriertransformation nachgeordnet ist und zur Realisierung der Empfangsstufen zumindest ein Signalprozessor vorgesehen ist.

Bei einer Vielzahl von Anwendungen, wie Sonar, Radar, Satellitenkommunikation und Mobilfunk sind hochauflösende Funkkanalmessungen, die auch eine Richtungsinformation liefern, erwünscht. Ein Funkkanal repräsentiert beispielsweise die Verbindung zwischen der Basisstation und Mobilstationen. Steigende Anforderungen an die Kapazität und begrenzte Frequenzressourcen erfordern einen erhöhten spektralen Wirkungsgrad. In dieser Beziehung kann man einen merklichen Gewinn durch den Einsatz von intelligenten Antennengruppen an Basisstationen erzielen, wobei die dem Funkkanal inhärente Raumdiversität ausgenutzt wird. Zweidimensionale Gruppengeometrien erlauben die Schätzung sowohl des azimuthalen als auch des Elevationswinkels der dominanten, also z.B. leistungsstärksten, Wellenfronten, die an der Gruppe einfallen. Beispielsweise ist 2-D Unitary ESPRIT ein effizientes Verfahren in geschlossener Form zur Schätzung automatisch gepaarter Azimuth- und Elevationswinkel, wie in M. Haardt, M. D. Zoltowski, C. P. Mathews, and J. A. Nossek, "2D Unitary ESPRIT for Efficient 2D Parameter Estimation", in Proc. IEEE Int. Conf. Acoust., Speech, Signal Processing, vol. 3, pp. 2096-2099, Detroit, MI May 1995 angegeben.

Eine genaue Kenntnis des mobilen Funkkanals hinsichtlich der dominanten azimuthalen Elevationswinkel ist wesentlich, um wirksame intelligente Antennenkonzepte für zukünftige Mobilfunksysteme entwickeln zu können. Wenn man die Elevation der dominanten Wellenfronten berücksichtigt, hilft dies beispielsweise das Nahe-Fern-Problem in Mobilfunksystemen wesentlich zu reduzieren, was z.B. für CDMA-Systeme (Code Division Multiple Access) mit direkten Sequenzen besonders wichtig ist. Intelligente Antennen benutzende ausgeklügelte Konzepte sind von großem, nicht zuletzt auch kommerziellem Interesse für unterschiedliche Mobilfunksysteme, insbesondere für Mobilfunksysteme der 3. Generation.

Es ist somit erforderlich, die Statistik der zweidimensionalen Einfallsrichtungen und Verzögerungen der einlangenden Wellenfronten zu finden und auszuwerten.

Davon ausgehend, daß die Bestimmung lediglich des Azimuths der einlangenden Wellenfronten einen erheblichen Fehler liefert, falls die Elevation der einlangenden Wellenfronten groß ist, wurde gemäß J. Fuhl, J. P. Rossi, and E. Bonek, "High-resolution 3D direction-of-arrival determination for urban mobile radio", IEEE Trans. Antennas and Propagation, vol. pp. 672-682, Apr. 1997, ein 3D-Kanaluntersuchungsverfahren geschaffen. In dieser Literaturstelle beschreiben die Autoren eine Meßanordnung zur Kanaluntersuchung, bei welcher hochauflösende Schätzungen der 2D-Einfallsrichtungen (Azimuth und Elevation) der dominanten Ausbreitungswege dadurch bestimmt werden, daß ein zweidimensionales harmonisches Suchproblem für jede geschätzte Impulsantwort-Verzögerungszeit getrennt gelöst wird. Der dabei verwendete Kanaltester sendet einen Träger bei $f_0$=890 MHz aus, der mit 15 Mbits/s mit einer Maximallängen-Binärsequenz phasenmoduliert ist, die 511 Bits enthält. Die an einer uniformen rechteckförmigen Gruppe identischer Antennen gewonnenen Messungen werden sodann demoduliert, in das Basisband gemischt und zerlegt, um die I- und Q-Komponenten zu erhalten. Die auf diese Weise erhaltenen komplexen Hüllkurven werden mit der Maximallängen-Binärsequenz korreliert, um die Impulsantwort für jeden Sensor der Antennengruppe getrennt zu erhalten. Diese Impulsantworten werden für die Weiterverarbeitung gespeichert. Beide Winkel, nämlich Azimuth und Elevation, der auf die Antennengruppe einfallenden dominanten Wellenfronten werden gemeinsam über das bereits erwähnte 2D Unitary ESPRIT für jede vorgegebene Verzögerungszeit getrennt bestimmt. Hierzu sei noch zusätzlich auf M. Haardt, "Efficient One-, Two, and Multidimensional High-Resultion Array Signal Processing", Dissertation, Technische Universität München 1996, ISBN 3-8265-2220-6(S.63-66), verwiesen. Als Vorverarbeitungsschritt zum Dekorrelieren kohärenter Wellen wird ein räumliches Glätten mit überlappenden Untergruppen verwendet und schließlich werden die Winkel und Amplituden der Wellenfronten für jede Verzögerungszeit getrennt geschätzt.

Dieses 2-D Unitary ESPRIT-Verfahren wurde in verschiedenen Feldexperimenten in Verwendung mit dem Kanaltester und einer uniformen rechteckförmigen Antennengruppe erfolgreich verwendet, wobei für die dominanten Ausbreitungspfade gepaarte 2D Einfallswinkelschätzungen automatisch geliefert wurden. Die Meßergebnisse bilden eine Basis zur Untersuchung und Auswertung von Strahlverfolgungsmodellen und für die Parameter von gerichteten Kanalmodellen. Bei den meisten bekannten Meßanordnungen war die (virtuelle) Antennengruppe an der Basisstation installiert und es wurde von der Mobilstation aus gesendet. In der genannten Literaturstelle IEEE Trans. Antennas and Propagation ist der Sender an der Basisstation vorgesehen und die (virtuelle) Antennengruppe ist mobil. Bei verschiedenen bekannten Meßversuchen wurde die Antennengruppe durch Bewegung einer Einzelantenne in die Positionen von Antennenelementen der virtuellen Antennengruppe simuliert. Dabei muß eine besondere Aufmerksamkeit auf ein exaktes Positionieren und auf eine sorgfältige Synchronisierung zwischen Sender und Empfänger gerichtet werden, wozu auch auf U. Martin, "Modeling the Mobile Radio Channel by Echo Estimation", Frequenz, vol. 48, pp. 198-212, 1994 verwiesen wird. In der bereits zweimal erwähnten Literaturstelle aus IEEE Trans. Antennas and Propagation wird auch gezeigt, daß die Verwendung des 2-D Unitary ESPRIT-Verfahrens zu einer Auflösung führt, die um eine Größenordnung höher als bei einer konventionellen Fourieranalyse ist.

Weiterhin ist aus Richard Roy und Thomas Kailath, "ESPRIT - Estimation of Signal Parameters Via Rotational Invariance Techniques" in IEEE Transactions on Acoustics, Speech and Signal Processing, Vol. 37, No. 7, July 1989, Seiten 984-995, ein Verfahren bekannt, mit dem auch die Einfallsrichtung empfangener Wellenfronten geschätzt werden kann. Aus DE 195 11 752 A1 ist ein Verfahren zum hochauflösenden Auswerten von Signalen zur Richtungs- oder Frequenzschätzung bekannt.

Aus Josef Fuhl et al., "High-Resolution 3-D Direction-of-Arrival Determination for Urban Mobile Radio", IEEE Transactions on Antennas and Propagation, Bd. 45, Nr. 4, April 1997, Seiten 672-682 ist ein Verfahren zur Richtungsschätzung von an einem Empfänger einfallenden elektromagnetischen Wellen bekannt, bei nach vorhergehender Bestimmung von Laufzeitverzögerungen der elektromagnetischer Wellen eine zeitgleiche Ermittlung von Azimuth- und Elevationswinkel erfolgt.

Eine Aufgabe der Erfindung liegt darin, ausgehend von den bekannten Verfahren ein Verfahren zu finden, das mit höherer Genauigkeit in kurzen Meßzeiten und mit geringem Rechenaufwand die gleichzeitige Bestimmung von Azimuth und Elevation sowie der Verzögerung der dominanten Wellenfronten ermöglicht.

Diese Aufgabe wird durch ein Verfahren mit den in Anspruch 1 genannten Merkmalen gelöst.

Eine Datenmatrix enthält, wenn Azimuth, Elevation und Verzögerung geschätzt werden, überlagert für jede Wellenfront zwei räumliche und eine zeitliche Invarianz.

Die beiden räumlichen Frequenzen lassen sich sehr einfach in den Einfallswinkel der Wellenfronten an der Meßstation (Azimuth und Elevation) und die zugehörige zeitliche Frequenz in die zugehörige Verzögerung an der Meßanordnung umrechnen.

Die Erfindung ermittelt die sich in der Datenmatrix überlagernden räumlichen und zeitlichen Invarianzen jeder dominanten Wellenfront und rechnet sie für jede dominante Wellenfront in entsprechende Winkel und Verzögerungen um. Weiter können auf der Basis der geschätzten dreidimensionalen Parameter die komplexen Amplituden geschätzt werden.

Verbesserte Ergebnisse lassen sich vielfach erhalten, wenn die Testsequenz eine Chip-Signalform aufweist und das gleichzeitige Schätzen unter Berücksichtigung der Chip-Signalform der Testsequenz erfolgt.

Eine vorteilhafte Signalverarbeitung ist gegeben, falls die Signale jedes Antennensensors demoduliert werden und sodann eine Abtastung mit einer Anzahl $M_c$ von Abtästwerten je Chip der Testsequenz erfolgt.

Im Sinne einer einfachen Signalverarbeitung ist es auch zweckmäßig, wenn die sich ergebenden Abtastwerte durch diskrete Fouriertransformation in den Frequenzbereich transformiert werden, und/oder die sich ergebenden Werte unter Berücksichtigung des Spektrums der Chip-Signalform korrigiert werden, wobei die aus den erhaltenen Werten für jeden Sensor gebildeten Zeilenvektoren zu einer Datenmatrix $X_{F'}$ zusammensetzbar sind, welche den Kanal charakterisierende Invarianzen im Raum-Frequenz-Bereich enthält.

Verglichen mit den bekannten Verfahren läßt sich mit der Erfindung die Genauigkeit merklich erhöhen und der Rechenaufwand ebenso senken wie die Meßzeit. Die Erfindung ist besonders im Mobilfunkbereich zweckmäßig einsetzbar, jedoch keineswegs darauf beschränkt. Ihre Vorteile kommen beispielsweise auch in Sonaranwendungen und in der Radartechnik zur Geltung. Dies bedeutet, daß das erfindungsgemäße Verfahren nicht auf "Funkkanäle" mit Hertz'schen Wellen eingeschränkt ist, sondern daß es beispielsweise auch bei Ultraschallkanälen eingesetzt werden kann.

Bei einer zweckmäßigen Variante der Erfindung ist vorgesehen, daß als Sendesignal eine modulierte Pseudo-Rausch-Sequenz verwendet wird. Die Verwendung einer solchen Pseudo-Rausch-Sequenz ergibt den Vorteil, daß sie einerseits einfach erzeugbar und andererseits leicht auswertbar ist.

Eine einfache Signalverarbeitung ergibt sich auch, wenn die Signale jedes Antennensensors vor dem Demodulieren in das Basisband gemischt werden.

Bei einer empfehlenswerten Variante werden die Abtastsignale signalangepaßt gefiltert, da sich dadurch eine Optimierung des Signal/Rauschverhältnisses ergibt.

Des weiteren ist es zweckmäßig, wenn die empfangenen Signale überabgetastet, d.h. mit einer Abtastfrequenz größer als die doppelte Empfangssignalbandbreite abgetastet werden, da sich hierdurch eine Verbesserung des Signal/Rauschverhältnisses erreichen läßt.

Um den Einfluß des Rauschens gering zu halten, empfiehlt es sich, wenn nach Transformation der Abtastwerte in den Frequenzbereich unter einer vorgebbaren Leistungsgrenze liegende Werte verworfen werden. Zusätzlich ergibt sich dadurch nämlich ein verringerter Rechenaufwand.

Zweckmäßig ist eine Variante, bei welcher die Abtastwerte nach Transformation in den Zeitbereich durch Teilung durch das quadrierte Spektrum der Chip-Signalform korrigiert werden, da hierdurch die zeitliche Invarianzstruktur der abgetasteten Daten verbessert wird.

Auch kann es zweckmäßig sein, wenn die Abtastwerte im Raum-Frequenz-Bereich einer Glättung unterworfen werden, da sich dadurch eine weitere Reduzierung des Rechenaufwandes und eine Dekorrelation der Wellenfronten erreichen läßt.

Eine empfehlenswerte Variante ist dadurch gekennzeichnet, daß die Ermittlung und Zuordnung der sich überlagernden räumlichen und zeitlichen Invarianzen mit Hilfe eines dreidimensionalen, hochauflösenden Frequenzschätzalgorithmus im Raum-Frequenz-Bereich durchgeführt wird. Durch die gemeinsame Schätzung von Azimuth, Elevation und Verzögerungszeit der dominanten Wellenfronten ergibt sich eine höhere Schätzgenauigkeit.

Die Erwartungstreue der Schätzergebnisse ist gewährleistet, wenn in dem dreidimensionalen, hochauflösenden Frequenzschätzalgorithmus das farbige Rauschen im Raum-Frequenz-Bereich berücksichtigt wird.

Empfehlenswert ist es, wenn zur Paarung der Schätzwerte eine gleichzeitige Schur-Zerlegung der drei Matrizen, aus deren Eigenwerten die dreidimensionalen Frequenzschätzwerte gewonnen werden, durchgeführt wird, da man dadurch eine Eindeutigkeit und eine höhere Schätzgenauigkeit erhält.

Man kann vorsehen, daß als Frequenzschätzalgorithmus das 3-D Unitary ESPRIT Verfahren eingesetzt wird, da dieses automatisch gepaarte 3-D Parameter-Schätzwerte und eine hohe Schätzgenauigkeit bei geringem Rechenaufwand liefert.

Zweckmäßig ist es, auch, wenn die komplexen Amplituden gemeinsam im Raum-Frequenz-Bereich und/oder im Raum-Zeit-Bereich geschätzt werden. Die gemeinsame Schätzung im Raum-Frequenz-Bereich hat den Vorteil, daß die Schätzung in der gleichen Domäne erfolgt, wie die übrige Parameterschätzung, wogegen die gemeinsame Schätzung im Raum-Zeit-Bereich weniger Rechenaufwand bedeutet und genauere Schätzergebnisse liefert.

Dabei ist es empfehlenswert, wenn die gemeinsame Schätzung nach dem Weighted-Least-Squares-Verfahren durchgeführt wird, da dieses dem erwartungstreuen Schätzen mit minimaler Varianz entspricht. Hierzu sei auf D. G. Luenberger, Optimization by Vector Space Models, John Wiley and Sons, New York, NY, 1969(S.82, 83) verwiesen.

Die gestellte Aufgabe wird auch durch eine Meßanordnung mit den in Anspruch 19 genannten Merkmalen gelöst.

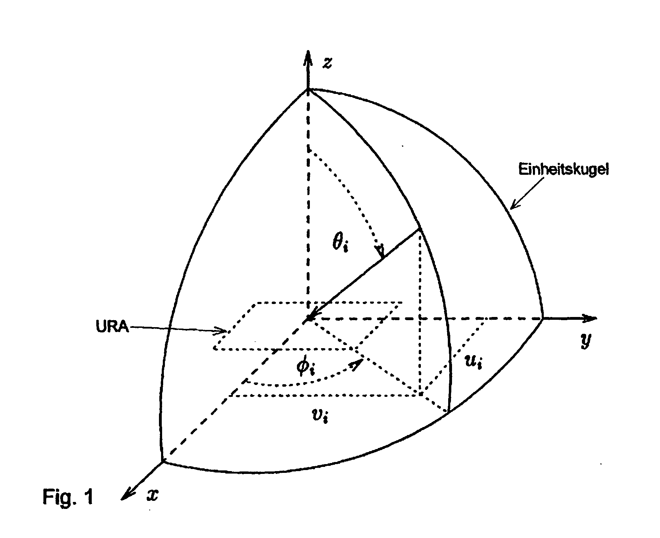

Die Erfindung ist im folgenden anhand von Ausführungsbeispielen näher erläutert, die in der Zeichnung veranschaulicht sind. In dieser zeigen Fig.1 die Definitionen von Azimuth und Elevation und

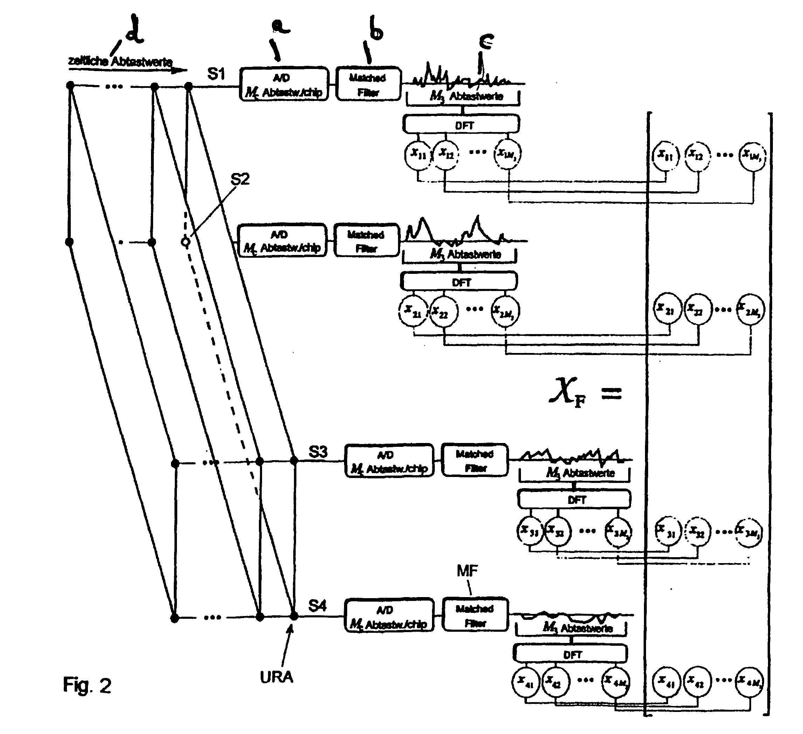

Fig.2 in schematischer Darstellung den Weg des erfindungsgemäßen Verfahrens, ausgehend von den Einzelantennen einer uniformen rechteckförmigen Antennengruppe bis zu der das Kanalmodell repräsentierenden Datenmatrix.

Die Erfindung wird zunächst kurz zusammengefaßt und sodann unter Bezugnahme auf die detaillierten Verfahrensschritte und einige Ausführungsbeispiele näher erläutert.

Ausgangspunkt ist das Verfahren gemäß der bereits mehrfach genannten Literaturstelle IEEE Trans. Antennas and Propagation, wobei der Träger mit einer Maximallängen-Binärsequenz, die 511 Bits enthält, phasenmoduliert wird. Nach Demodulieren und Heruntermischen besteht die komplexe Hüllkurve aus einer Folge rechteckförmiger Chips. Im Gegensatz zu den bekannten Verfahren erlaubt die Erfindung allerdings die Verwendung unterschiedlicher Chip-Signalformen. Selbst im Fall einer rechteckförmigen Chip-Signalform, wie gemäß der DE 195 11 751 A, verbessert die Erfindung die Leistungsfähigkeit merklich, falls man mehr als einmal je Chip abtastet. Dazu ist zu bemerken, daß bei einer Abtastung einmal je Chip ($M_C$=1) eine Korrelation mit der PN-Sequenz (Pseudo Noise Sequenz) im Zeitbereich zu einer Spitze führt. Falls jedoch $M_C$=2, erzeugt eine Korrelation drei Spitzen, die als drei Wellenfronten mit identischen Einfallsrichtungen jedoch unterschiedlichen Amplituden und Verzögerungen interpretiert werden. Um diese Mehrdeutigkeit zu vermeiden und damit ungenaue Schätzungen, muß die Chip-Signalform beim Überabtasten in Betracht gezogen werden. Falls andere Chip-Signalformen verwendet werden - und dies wird weiter unten noch erläutert - wird die Leistungsfähigkeit auch dann verbessert, wenn man lediglich einmal je Chip abtastet, d.h. $M_C$ = 1.

Bei dem bekannten Verfahren wird angenommen, daß die Raum-Frequenz-Korrelationsmatrix des additiven Rauschens (plus Interferenzstörungen) $R_{nn}$ gleich der skalierten Identitätsmatrix ist, d.h.

$$R_{nn} = \sigma_n^2 I. \tag{1}$$

Im allgemeinen gilt Gleichung (1) nicht, auch wenn das Rauschen im Raum-Zeit-Bereich räumlich und zeitlich unkorreliert ist. Die Erfindung kann aber auch farbiges Rauschen in dem Raum-Frequenz-Bereich verarbeiten. Die Raum-Frequenz-Korrelationsmatrix des additiven Rauschens wird beispielsweise geschätzt, während kein aktiver Betrieb vorliegt, was noch unten erläutert wird. Ist die Statistik des einfallenden Rauschens bekannt, läßt sich die Rauschkovarianzmatrix im Raum-Frequenz-Bereich auch berechnen. Bei der Erfindung wird der hochauflösende richtungsfindende Algorithmus Unitary ESPRIT entsprechend modifiziert.

Da lediglich die Parameter der dominanten Wellenfrohten geschätzt werden, können schwache Wellenfronten als farbiges Rauschen interpretiert werden. Die Kovarianzmatrix dieses Rauschens kann dadurch geschätzt werden, daß die Kovarianzmatrix der geschätzten dominanten Wellenfronten von der geschätzten Kovarianzmatrix aller,Wellenfronten subtrahiert wird. Dadurch ist eine weitere Steigerung der Schätzgenauigkeit möglich.

Das 3-D Unitary ESPRIT Verfahren ermöglicht die gemeinsame Schätzung der 2-D Einfallsrichtungen, die Azimuth und Elevation beinhalten, sowie der Verzögerung der dominanten Wellenfronten. Diese Parameterschätzungen erfolgen automatisch paarweise. Die dabei erzielbare Genauigkeit ist extrem hoch. Es läßt sich zeigen, daß die Leistungsfähigkeit des 3-D Unitary ESPRIT Verfahrens sehr nahe an die Cramer-Rao-Untergrenze für realistische Signalrauschverhältnisse (SNR ≥ 5dB) kommt. Bei dem vorher mehrfach genannten Verfahren wird die Impulsantwort für jeden Sensor getrennt geschätzt. Sodann werden die zweidimensionalen Einfallsrichtungen getrennt für jede gerasterte Verzögerungszeit geschätzt. Dies führt aufgrund der relativ großen Abstände zu einer Verschlechterung der zeitlichen Auflösung. Somit liegt ein Kompromiß zwischen zeitlicher Auflösung und Rechenaufwand vor. Durch gemeinsames Schätzen der Parameter wird bei der Erfindung dieser Kompromiß vermieden und eine merkliche Erhöhung der Genauigkeit, verglichen mit dem bekannten Verfahren, erreicht. Es wird angemerkt, daß bei Kanaluntersuchungsalgorithmen, die auf Lösungen der maximalen Wahrscheinlichkeit beruhen, die Rechenkomplexität merklich größer als bei dem 3-D Unitary ESPRIT-Verfahren ist.

Bei dem bekannten Verfahren werden die Amplituden für feste Verzögerungszeiten geschätzt, was auf den für entsprechende feste Verzögerungen in dem Raum-Zeit-Bereich geschätzten Einfallsrichtungen basiert. Demgegenüber ist bei der Erfindung die Genauigkeit sowohl für die Verzögerungen als auch für die 2-D Einfallsrichtungen aufgrund der oben genannten gemeinsamen Parameterschätzung höher.

Weiters können die Amplituden unter Berücksichtigung sowohl der Einfallsrichtungen als auch der Verzögerungen gemeinsam geschätzt werden. Dies erhöht die Genauigkeit für die Amplitudenschätzung signifikant. Die Schätzung kann entweder in dem Raum-Frequenz-Bereich oder in dem Raum-Zeit-Bereich durchgeführt werden, wobei im allgemeinen die in dem Raum-Zeit-Bereich erhaltenen Resultate genauer sind.

Da von der Annahme ausgegangen wird, daß der Kanal während der Kanaluntersuchung zeitinvariant ist, ist es empfehlenswert, die Meßzeit auf ein kurzes Intervall zu beschränken. Dies kann durch Verringerung der Anzahl von Abtastungen erfolgen, ohne daß dadurch - verglichen mit dem bekannten Verfahren - eine Verschlechterung der Ergebnisse entsteht. Eine merkliche Erhöhung der Genauigkeit ist bei der Erfindung dadurch möglich, daß die Chip-Signalform berücksichtigt wird. Dadurch kann die Anzahl zur Verfügung stehender Abtastungen durch Überabtastung erhöht werden, um auch eine höhere Genauigkeit zu erreichen. Dazu ist zu bemerken, daß bei dem aus der genannten Literaturstelle (IEEE Trans. Antennas and Propagation) bekannten Verfahren ein Überabtasten zu einem Modellfehler führt.

Eine merkliche Erhöhung der entstehenden Schätzgenauigkeit wird durch eine gemeinsame Schätzung der Parameter, basierend auf dem 3-D Unitary ESPRIT-Verfahren erhalten. Weiters können bei der Erfindung die Amplituden unter Verwendung vorher geschätzter Verzögerungen bzw. 2-D Einfallsrichtungen in dem Raum-Frequenz- oder dem Raum-Zeit-Bereich geschätzt werden, was zu einer weiteren Erhöhung der Genauigkeit führt.

Zur näheren Erklärung der Erfindung wird im folgenden angenommen, daß der Kanal über P Impulszüge zeitinvariant bleibt. Das Testsignal besteht aus P Impulsfolgen, die mittels einer PN-Sequenz, wie z.B. in S. Haykin, Communication Systems, John Wiley & Sons, New York, NY, 3rd edition, 1994(S.431-434), beschrieben, moduliert ist und kann angeschrieben werden als:

$$s(t) = \sum_{i=0}^{P-1} c(t - iT) \quad \text{mit} \quad c(t) = \sum_{m=0}^{N_c-1} d_m p_c(t - mT_c). \qquad (2)$$

Dabei ist $N_c$ die Anzahl der Chips in einer PN Sequenz, definiert durch $d_m$, $1 \leq m \leq N_c - 1$. In der obigen Gleichung bezeichnet $T_c$ die Chipdauer, $T$ die Sequenzdauer und $p_c(t)$ die Chip-Signalform. Beispielsweise läßt sich die sogenannte "Raised-Cosine"-Signalform verwenden, die folgendermaßen definiert ist:

$$p_c(t) = \sqrt{\frac{E_c}{T_c}} \cdot \sin c(2W_n t) \cdot \frac{\cos(2\pi \beta W_n t)}{1 - (4\beta W_n t)^2}, \qquad (3)$$

wobei $W_n = \frac{1}{2 \cdot T_c}$, mit β der Roll-off-Faktor bezeichnet ist und $W = W_n(1+\beta)$ die benötigte Signalbandbreite bezeichnet (vgl. S. Haykin, Communication Systems, John Wiley & Sons, New York, NY, 3$^{rd}$ edition, 1994). $W_n$ bezeichnet die Signalbandbreite eines Nyquist Kanals ($\beta$=0). Um der Nyquist-Bedingung zu genügen, muß das Abtastintervall kleiner oder gleich $T_c/(1+\beta)$ sein.

Weiters wird angenommen, daß die (mobile) Funkstelle sich in dem Fernfeld der Antennengruppe befindet, sodaß die einfallenden Wellenfronten annähernd eben sind. Die Schmalbandannahme ist gültig: Wenn die komplexen Einhüllenden der einfallenden Wellenfronten sich während der Ausbreitungszeit entlang der Antennengruppe nur unwesentlich ändern. Das Signalmodell enthält somit die Verzögerung, die Amplitude und die 2-D Einfallsrichtungen jeder Wellenfront, die an der Antennengruppe der Meßstation einlangen. Ohne daß damit ein Verlust an Allgemeingültigkeit eintritt, wird eine uniforme rechteckförmige Gruppe URA mit $M_1$ Sensoren in $x$-Richtung und $M_2$ Sensoren S1 ... S4 in $y$-Richtung an der Empfangsstation verwendet (siehe Fig.2). An der Gruppe fallen $K$ schmalbandige ebene Wellenfronten der Wellenlänge $\lambda$, mit dem Azimuth $\phi_k$ und der Elevation $\theta_k$ (vgl. Fig.1) sowie der Amplitude $\rho_k$, $1 \le k \le K$ ein. Die rauschbehafteten Messungen können gebildet werden zu:

$$x(t) = AD_s s(t) + n(t). \tag{4}$$

wobei die Sensorausgänge zur Zeit $t$ in einem Spaltenvektor **x(t)** übereinander geschrieben sind, sodaß die Steuermatrix der Gruppe

$$A = \left[ a(\mu_1^{(1)}, \mu_1^{(2)}) \quad a(\mu_2^{(1)}, \mu_2^{(2)}) \quad \cdots \quad a(\mu_k^{(1)}, \mu_k^{(2)}) \right] \in C^{M_1 M_2 \times K} \tag{5}$$

der Bedingung der Zentrosymmetrie genügt. Hier sind die räumlichen Frequenzen in $x$-Richtung, $\mu_i^{(1)}$, und die räumlichen Frequenzen in $y$-Richtung, $\mu_i^{(2)}$, skalierte Versionen der entsprechenden Richtungskosinusse, nämlich

$$\mu_i^{(1)} = \frac{2\pi}{\lambda} \Delta_x u_k \text{ und } \mu_k^{(2)} = \frac{2\pi}{\lambda} \Delta_y v_k \qquad 1 \le k \le K \tag{6}$$

wobei

$$u_k = \cos\phi_k \sin\theta_k \text{ und } v_k = \sin\phi_k \sin\theta_k, \qquad 1 \le k \le K \tag{7}$$

die Richtungskosinusse der $i$-ten Quelle bezüglich der x- und $y$-Achsen gemäß Fig.1 bezeichnen. Die Winkel $\phi_k$ und $\theta_k$ bezeichnen den Azimuth und die Elevation der $k$-ten Wellenfront. Die Skalare $\Delta_x$ und $\Delta_y$ bezeichnen den Abstand zwischen den Sensoren in $x$- bzw. $y$-Richtung und die Hochstellung $^T$ bezeichnet die Transponierung. Die Steuervektoren der Gruppe sind definiert als

$$a\left(\mu_k^{(1)}, \mu_k^{(2)}\right) = a\left(\mu_k^{(2)}\right) \otimes a\left(\mu_k^{(1)}\right) \tag{8}$$

mit

$$a\left(\mu_k^{(1)}\right) = \left[ 1 \quad e^{j\mu_k^{(1)}} \quad \cdots \quad e^{j(M_1-1)\mu_k^{(1)}} \right]^T, \qquad a\left(\mu_k^{(2)}\right) = \left[ 1 \quad e^{j\mu_k^{(2)}} \quad \cdots \quad e^{j(M_1-1)\mu_k^{(2)}} \right]^T$$

Aufgrund der Mehrwegeausbreitung enthält **s(t)** $K$ unterschiedliche verzögerte Versionen des Testsignals gemäß:

$$s(t) = [s(t-\tau_1) \ s(t-\tau_2) \ ... \ s(t-\tau_k) \ ... \ s(t-\tau_K)]^T. \tag{9}$$

dabei bezeichnet $\tau_k$ die unbekannte Ausbreitungsverzögerung der $k$-ten Wellenfront. Es sei daran erinnert, daß im Gegensatz zu dem eingangs genannten Verfahren nach dem Stand der Technik die 3-D Parameter der dominanten Wellenfronten gemeinsam geschätzt werden, nämlich die Azimuthwinkel, die Elevationswinkel und die Verzögerungen der einfallenden Wellenfronten. Die $K \times K$ Diagonalmatrix $D_S$ ist gegeben durch

$$D_S = diag\{\rho_1, \rho_2, ..., \rho_K\},$$

wobei $\rho_k$ die Amplitude der Mehrwege $k$ und $n(t) \in C^{M_1 M_2}$. das additive Rauschen bezeichnen. Die räumliche Rausch-kovarianzmatrix ist definiert als:

$$R_{nn,S} = E\left\{ nn^H \right\} \in C^{M_1 M_2 \times M_1 M_2}. \qquad (10)$$

Das empfangene Signal an jeder Antenne wird mit einer Rate $f_s = \frac{M_c}{T_c}$ abgetastet. Die Anzahl von Abtastungen je Chip $M_c$, die dem Überabtastfaktor äquivalent ist, wird als ganzzahlig angenommen. Mit $X$ sei die $M_1 M_2 \times M_3$ komplexe Datenmatrix bezeichnet, die aus $M_3 = N_c M_c$ Abtastungen x $(nT_c/M_c)$, $1 \le n \le M_3$ besteht. Diese Messungen werden an allen $M_1 M_2$ Sensoren gleichzeitig abgetastet.

Der abgetastete Ausgang jeder Antenne wird durch ein Filter mit dem Impulsverhalten **h[n]=c[-n]** geführt, wobei $c[n]=c(nT_c/M_c)$. Mit $X_{MF}$ sei die $M_1 M_2 \times M_3$-Matrix bezeichnet, deren $i$-te Spalte $M_3$ Werte des Ausganges der $i$-ten Antenne nach dem signalangepaßten Filter (= Matched Filter) enthält. Es ist zu beachten, daß die Faltung in dem Zeitbereich stattfindet. Unter Zugrundelegung der Gleichung (4) kann $X_{MF}$ ausgedrückt werden als:

$$X_{MF} = A\Sigma_S C, \qquad (11)$$

wobei C eine $K$ x $M_3$ Matrix ist, gegeben durch:

$$C = \begin{bmatrix} r_{cc}(-\tau_1) & r_{cc}(\frac{T_c}{M_c} - \tau_1) & ... & r_{cc}((M_3 - 1)\frac{T_c}{M_c} - \tau_1) \\ r_{cc}(-\tau_2) & r_{cc}(\frac{T_c}{M_c} - \tau_2) & ... & r_{cc}((M_3 - 1)\frac{T_c}{M_c} - \tau_2) \\ \vdots & \vdots & \vdots & \vdots \\ r_{cc}(-\tau_K) & r_{cc}(\frac{T_c}{M_c} - \tau_K) & ... & r_{cc}((M_3 - 1)\frac{T_c}{M_c} - \tau_K) \end{bmatrix} \qquad (12)$$

Dabei wird die Autokorrelationsfunktion der Spreizsignalform $c(t)$ in Gleichung (2) definiert als

$$r_{cc}(\tau) = c(\tau)^* c(-\tau), \qquad (13)$$

in welcher * die Faltung bezeichnet. Die Transformation des Raum-Zeit-Kanalmodells in ein Raum-Frequenz-Kanalmodell wird durch Rechts-Multiplizieren von $X_{MF}$ durch die $N_c M_c \times M_3$ DFT (diskrete Fourier Transformation) Matrix W erreicht:

$$X_F = X_{MF} W \qquad (14)$$

Wenn die Anzahl der Frequenzbins eine Potenz von 2 ist, können für die Berechnung der Gleichung (14) sehr recheneffiziente FFT-Algorithmen (Fast Fourier Transformation) verwendet werden.

Oben wurde beschrieben, wie man die Matrix $X_F$ erhält und dies ist auch in Fig.2 dargestellt. Aus dieser erkennt man eine uniforme rechteckförmige Antennengruppe URA, die hier aus $2 \times 2$ Elementen besteht. Von links nach rechts ist dabei symbolisch der zeitliche Verlauf der Abtastwerte eingezeichnet und die Anzahl von Abtastungen ist mit $M_3$ bezeichnet. Für jeden der Sensoren ist eine Analog-Digital-Konvertierung mit $M_c$ Abtastungen je Chip vorgesehen, wobei je ein signalangepaßtes Filter MF folgt. Die $N_c M_c$ Abtastungen werden einer diskreten Fouriertransformation unterzogen und führt zu den Werten $X_{1,1}...X_{1M_3}$ bis $X_{4,1}...X_{4M_3}$, wodurch sich die ganz rechts dargestellte Raum-Frequenz-Datenmatrix $X_F$ ergibt. Durch Abtasten von (13) erhält man

$$r_{cc}[n] = r_{cc}\left( n \frac{T_c}{M_c} \right).$$

Der $N_c M_c$ abgetastete Korrelationswerte der Korrelationsfunktion enthaltende Vektor wird in den Frequenzbereich gemäß

$$r_{DFT} = \mathbf{W}^T \begin{bmatrix} r_{cc}[0] \\ r_{cc}[1] \\ \vdots \\ r_{cc}[N_c M_c - 1] \end{bmatrix}, \tag{15}$$

transformiert, wobei W die $N_c M_c \times M_3$ DFT-Matrix ist. Die Chip-Signalform kann durch Modifizieren der Raum-Frequenz-Bereich-Datenmatrix $X_F$ in Gleichung (14) wie folgt berücksichtigt werden:

$$X_{F'} = X_F \left( diag(r_{DFT}) \right)^{-1} \tag{16}$$

Die Koeffizienten in $r_{DFT}$ können sehr nahe an Null oder Null sein. Es werden nur die $M_3 \leq N_c M_c$ Frequenzbins in (14) berechnet, die nicht mit den Kehrwerten von sehr kleinen Koeffizienten von $r_{DFT}$ multipliziert werden, um Rauschverstärkung zu vermeiden. Der Glättungsvorgang wird nun im folgenden erläutert.

Die Matrix $X_{F'}$ kann als ein einzelner Abtastwert einer (virtuellen) uniformen, kubischen Anordnung der Größe $M_1 \times M_2 \times M_3$, interpretiert werden. Daher ist ein 3-D Raum-Frequenzglätten unter Verwendung überlappender Untergruppen wichtig, wie in der bereits genannten Dissertation M. Haardt beschrieben. Es ist zu beachten, daß ein 1-D Glätten auf alle drei Dimensionen voneinander unabhängig angewendet werden kann, indem die $M$, Messungen der $r$-ten Dimension in $L_r$ Gruppen (oder Untergruppen) geteilt werden, von welchen jede $M_{sub_r} = M_r - L_r + 1$ Messungen enthält. Die entsprechende 1-D Selektionsmatrizen sind gegeben durch:

$$\mathbf{J}_{l_r}^{(M_r)} = \begin{bmatrix} 0_{M_{sub_r} \times (l_r - 1)} & I_{M_{sub_r}} & 0_{M_{sub_r} \times (L_r - l_r)} \end{bmatrix}, \qquad 1 \leq l_r \leq L_r. \qquad 1 \leq r \leq 3. \tag{17}$$

Wir definieren die folgenden $L = \Pi_{r=1}^{3} L_r$ 3-D Selektionsmatrizen als

$$\mathbf{J}_{l1,l2,l3} = \mathbf{J}_{l_3}^{(M_3)} \otimes \mathbf{J}_{l_2}^{(M_2)} \otimes \mathbf{J}_{l_1}^{(M_1)} \in R^{M_{sub} \times M}, \qquad 1 \leq l_r \leq L_3. \tag{18}$$

wobei

$$M_{sub} = \prod_{r=1}^{3} M_{sub_r} \quad \text{und} \quad M = \prod_{r=1}^{3} M_r.$$

Mit $x_F = vec\{X_F\}$ wird die geglättete Datenmatrix der Abmessung $M_{sub} \times L$ wie folgt definiert:

$$X_{sub,F'} = \begin{bmatrix} J_{1,1,1}\,x_{F'} & J_{1,1,2}\,x_{F'} & \ldots & J_{1,1,L_3}\,x_{F'} & J_{1,2,1}\,x_{F'} & \ldots & J_{L_1,L_2,L_3}\,x_{F'} \end{bmatrix} \qquad (19)$$

Zur Schätzung der Ordnung des Modells wird angenommen, daß der Kanal über die Zeitdauer $T \cdot P$, d. h. über $P$ Datenmatrizen $X_{F'}$ der Sequenzdauer $T$ zeitinvariant ist. Die $P$ Datenmatrizen können gemäß

$$X_{sub} = \begin{bmatrix} X_{sub,F'}(1) & X_{sub,F'}(2) & \cdots & X_{sub,F'}(i) & \cdots & X_{sub,F'}(P) \end{bmatrix} \quad \in C^{M_{sub} \times LP}$$

zur genaueren Schätzung der Modellordnung vereinigt werden, nämlich zur Schätzung der Anzahl der dominanten Wellenfronten $K$. Auch dabei werden schwache Wellenfronten als Rauschen betrachtet.

Die Verfahren zur Abschätzung der Modellordnung beruhen auf informationstheoretischen Kriterien, wie z.B. in der bereits erwähnten Dissertation M. Haardt oder in M. Wax and T. Kailath, "Detection of signals by information theoretic criteria", IEEE Trans. Acoustics, Speech, and Signal Processing, vol. ASSP-33, S. 387-392, April. 1985 angegeben, oder sie beruhen auf bestimmten Schwellwertverfahren, wozu auf U. Martin, "Ausbreitung in Mobilfunkkanälen: Beiträge zum Entwurf von Meßgeräten und zur Echoschätzung", Dissertation, Universität Erlangen, Oktober 1994(S.164-180), verwiesen wird. Zweckmäßig ist die Anwendung des MDL Kriteriums (Maximum Description Length), welches ein Vorwärts-Rückwärts-Mitteln und Glätten berücksichtigt, wie aus der Dissertation Haardt hervorgeht. Für den Fall des Überabtastens sind die statistischen Annahmen gemäß der genannten Dissertation U. Martin, die für das MDL Kriterium benötigt werden, nicht mehr länger gültig. Es ist daher günstig, das MDL Kriterium getrennt für jede der $M_c$ Proben eines Chips für sämtliche Chips anzuwenden. Die $M_c$ Schätzungen der Modellordnung werden dann gemittelt, um die wahre Modellordnung zu erhalten.

Im folgenden wird die Anwendung des 3-D Unitary ESPRIT Verfahrens mit farbigem Rauschen beschrieben. Falls das Rauschen $n$ gemäß Gleichung (4) weiß und die Chip-Signalform rechteckförmig ist, ist das transformierte Rauschen $n_{F'}$ lediglich dann weiß, wenn kein Überabtasten vorgenommen wird. Die geglättete Rauschkovarianzmatrix in dem Raum-Frequenz-Bereich ist definiert als:

$$R_{nn} = E\{n_{F'sub} n_{F'sub}^{H}\} \in C^{M_{sub} \times M_{sub}}. \qquad (20)$$

Für jedes ganzzahlige $p$ bezeichnet $I_p$ die $p \times p$ Identitätsmatrix und $\Pi_p$ die $p \times p$ Austauschmatrix, deren Diagonale Einsen aufweist, wogegen sonst überall Nullen stehen:

$$\Pi_p = \begin{bmatrix} & & & 1 \\ & & 1 & \\ & \cdot\cdot & & \\ 1 & & & \end{bmatrix} \in R^{p \times p}.$$

Komplexes Konjugieren mit sich selbst wird durch einen Überbalken $\overline{(\cdot)}$ bezeichnet. Im weiteren werden Ma-

trizen $Q \in C^{p \times q}$, welche der Bedingung:

$$\Pi_p \overline{Q} = Q \Leftrightarrow \Pi_p Q = \overline{Q}$$

genügen, als links $\Pi$-reell bezeichnet, wozu auf die bereits genannten Literaturstellen Proc. IEEE Int. Conf. Acoust., Speech, Signal Processing und auf die Dissertation M. Haardt verwiesen wird. Beispielsweise sind die schwach besetzten unitären Matrizen

$$Q_{2n} = \frac{1}{\sqrt{2}} \begin{bmatrix} I_n & j I_n \\ \pi_n & -j \pi_n \end{bmatrix} \quad \text{und} \quad Q_{2n+1} = \frac{1}{\sqrt{2}} \begin{bmatrix} I_n & 0 & j I_n \\ 0^T & \sqrt{2} & 0^T \\ \pi_n & 0 & -j \pi_n \end{bmatrix}, \qquad (21)$$

links $\Pi$-reell von gerader bzw. ungerader Ordnung. Mit

$$\hat{R}_{xx} = \frac{1}{LP} X_{sub} X_{sub}^H \qquad\qquad (22)$$

wird die geschätzte Kovarianzmatrix der rauschbehafteten Messungen bezeichnet. Anstelle des in Gleichung (22) benutzten rechteckförmigen Fensters kann man auch ein gleitendes Fenster zur Berechnung von $R_{xx}$ verwenden. Weiters gibt $R_{nn}$ eine Schätzung der Kovarianzmatrix des additiven Rauschens gemäß (20), das in ähnlicher Weise jedoch ohne Gegenwart eines Quellensignals erhalten wird. Sodann werden diese Matrizen gemäß

$$G_{xx} = \mathrm{Re}\left\{ Q_{M_{sub}}^H \hat{R}_{xx} Q_{M_{sub}} \right\} \quad \text{und} \quad G_{nn} = \mathrm{Re}\left\{ Q_{M_{sub}}^H \hat{R}_{nn} Q_{M_{sub}} \right\}, \qquad (23)$$

transformiert, wobei $Q_{Msub}$ eine willkürliche links $\Pi$-reelle Matrix der Größe $M_{sub} \times M_{sub}$ bezeichnet, die gleichfalls unitär ist. Zur Spezifizierung von Selektionsmatrizen für das 3-D Unitary ESPRIT Verfahren wird zunächst definiert:

$$J_2^{(M_{sub_r})} = \begin{bmatrix} 0_{(M_{sub_r}-1)\times 1} & I_{M_{sub_r}-1} \end{bmatrix} \qquad\qquad (24)$$

als 1-D Selektionsmatrix entsprechend der maximalen Überlappung in der $r$-ten Dimension, wobei $1 \leq r \leq R$ ist. Unter Berücksichtigung des in der genannten Dissertation M. Haardt beschriebenen $R$-dimensionalen Stapelungsvorganges werden die gewünschten Selektionsmatrizen $J_{(r)2}$ konstruiert zu

$$J_{(1)2} = I_{M_{sub_3}} \otimes I_{M_{sub_2}} \otimes J_2^{(M_{sub_1})}, \quad J_{(2)2} = I_{M_{sub_3}} \otimes J_2^{(M_{sub_2})} \otimes I_{M_{sub_1}}, \quad J_{(3)2} = J_2^{(M_{sub_3})} \otimes I_{M_{sub_2}} \otimes I_{M_{sub_1}}$$

$$(25)$$

Sodann sind die drei korrespondierenden Paare transformierter Selektionsmatrizen gegeben durch

$$K_{(r)1} = 2 \cdot \mathrm{Re}\left\{ Q_{m_r}^H J_{(r)2} Q_{M_{sub}} \right\} \qquad K_{(r)2} = 2 \cdot \mathrm{Im}\left\{ Q_{m_r}^H J_{(r)2} Q_{M_{sub}} \right\}. \qquad (26)$$

Für eine virtuelle, uniforme, kubische Gruppe von $M_{sub} = M_{sub1}M_{sub2}M_{sub3}$ Elementen muß gelten:

$$m_r = \frac{M_{sub}\left(M_{sub_r} - 1\right)}{M_{sub_r}},$$

um ein maximales Überlappen aller Untergruppen in allen drei Richtungen zu erreichen. Die Anzahl der Elemente der Untergruppen in der $r$-ten Richtung wird durch $m_r$ bezeichnet.

Eine kurze Zusammenfassung der Anwendung des 3-D Unitary ESPRIT-Verfahrens mit farbigem Rauschen (Kovarianzlösung) ist nachstehend angegeben:

1. **Signalunterraumschätzung:** Berechne die generalisierte Eigenzerlegung des Matrixpaares $G_{xx}$ und $G_{nn}$, d. h.

$$G_{xx}E = G_{nn}E \cdot \Sigma \qquad \text{mit} \qquad \Sigma = diag\{\sigma_i\}_{i=1}^{M_{sub}}.$$

Dabei sind mit K die dominanten generalisierten Eigenvektoren des Matrixpaares $G_{xx}$ und $G_{nn}$ bezeichnet, die in $E_s \in R^{M_{sub} \times K}$ enthalten sind.

**2. Lösung der Invarianzgleichungen:** Löse =

$$\underbrace{K_{(r)1}G_{nn}E_s}_{R^{m_r \times K}} Y_\mu \approx \underbrace{K_{(r)2}G_{nn}E_s}_{R^{m_r \times K}} \qquad 1 \leq r \leq R,$$

mit Hilfe von LS, TLS, SLS oder 2-D SLS (LS = Least Square, TLS = Total Least Square, SLS= Structured Least Square)

**3. Gemeinsame räumliche und zeitliche Frequenzschätzung:** Berechne die SSD (=Simultaneous Schur Decomposition) der $R$ reell-wertigen $K \times K$ Matrizen $Y_r$ als

$$U_r = \Theta^T Y_r \Theta, \qquad 1 \leq r \leq R,$$

wobei $u_{kk}^{(r)}$, $1 \leq r \leq K$ die Diagonalelemente von $U_r$ darstellen und

$$\bullet \quad \mu_k^{(r)} = 2\arctan\left(u_{kk}^{(r)}\right), \qquad 1 \leq k \leq K, \qquad 1 \leq r \leq R.$$

Die simultane Schur-Zerlegung SSD, die einen Teil des 3-D Unitary ESPRIT-Verfahrens bildet, ist notwendig, um die Eigenwerte von $Y_r$ automatisch paarweise zu erhalten. Es ist daran zu erinnern, daß die reellen Eigenwerte der reellwertigen nichtsymmetrischen Matrizen wirkungsvoll durch eine reelle Schur-Zerlegung berechnet werden können. Für den Fall ohne Rauschen ergibt die neue SSD der $R$ Matrizen $Y_r \in R^{d \times d}$, für $1 \leq r \leq R$ $R$ reellwertige obere dreieckige Matrizen, die automatisch gepaarte, reellwertige Eigenwerte ihrer Diagonalen zeigen. Mit zusätzlichem Rauschen wird allerdings eine quadratische Kostenfunktion minimiert, was gleichfalls in der Dissertation M. Haardt gezeigt,ist. Die Eigenwerte führen zu Schätzungen der 3-D räumlichen und zeitlichen Frequenzen. Die sich ergebenden $R$ = 3-dimensionalen Frequenzvektoren besitzen die Komponenten

$$\mu_k^{(1)} = \frac{2\pi\Delta_x}{\lambda}u_k, \qquad \mu_k^{(2)} = \frac{2\pi\Delta_y}{\lambda}v_k, \qquad \mu_k^{(3)} = -2\pi\frac{\tau_k}{T} \tag{27}$$

wobei $T = T_cN_c$ die maximale Ausbreitungsverzögerung zur Bestimmung der Winkel in Gleichung (7) bezeichnet. Mit den geschätzten Einfallsrichtungen und Verzögerungen können die Amplituden in dem Raum-Zeit- oder in dem Raum-Frequenz-Bereich geschätzt werden.

**Schätzung der Amplituden in dem Raum-Frequenz-Bereich**

Der Datenvektor $x_{F'}$ wird erhalten durch

$$X_{F'} = vec\{X_{F,}\} \in C^{M_1M_2M_3} \tag{28}$$

wobei $x_F$ als Ergebnis einer einzelnen Abtastung zur Zeit $t_0$ interpretiert werden kann. Mit einem Datenmodell gemäß

$$x_{F'}(t_0) = A_v s_{F'}(t_0) + n_{F'}(t_0), \tag{29}$$

wie in Dissertation M. Haardt für dreidimensionales räumliches Filtern verwendet, gibt der absolute Wert des Vektors $S_{F'}$ die Signalleistung an. Es ist zu beachten, daß die virtuelle 3-D Steuermatrix $A_V$ unterschiedlich von der 2-D Steuermatrix $A$ gemäß Gleichung (8) ist. Die virtuelle 3-D Steuermatrix $A_{V'}$ ist vollständig durch die räumlichen Frequenzen $\mu_k^{(1)}$ und $\mu_k^{(2)}$ sowie durch die räumlichen Frequenzen $\mu_k^{(3)}$ wie folgt gegeben:

$$A_V = \left[ a\left(\mu_1^{(1)},\mu_1^{(2)},\mu_1^{(3)}\right) \quad a\left(\mu_2^{(1)},\mu_2^{(2)},\mu_2^{(3)}\right) \quad \cdots \quad a\left(\mu_K^{(1)},\mu_K^{(2)},\mu_K^{(3)}\right) \right] \in C^{M_1M_2M_3 \times K}$$

und

$$a\left(\mu_k^{(1)},\mu_k^{(2)},\mu_k^{(3)}\right) = a\left(\mu_k^{(3)}\right) \otimes a\left(\mu_k^{(2)}\right) \otimes a\left(\mu_k^{(1)}\right),$$

sofern die Gruppengeometrie bekannt und die Gruppe kalibriert ist. Die nicht invertierte Rauschkovarianzmatrix im Frequenzbereich $R_{nn,F'}$ ist definiert als:

$$R_{nn,F'} = E\left\{n_{F'}\, n_{F'}^H\right\}, \tag{30}$$

Es ist zu berücksichtigen, daß das Rauschen $n_{F'}$ im Frequenzbereich nicht weiß ist, falls man unter Verwendung einer rechteckförmigen Chip-Signalform überabtastet. Im Gegensatz zu $R_{nn}$ in Gleichung (20) beinhaltet die Matrix $R_{nn,F'}$ der Größe $M_1M_2M_3 \times M_1M_2M_3$ kein Raum-Frequenz-Glätten. Sodann erfolgt die Berechnung der linearen erwartungstreuen Minimalvarianzschätzung (Gauss-Markow-Schätzung) der Amplituden $\hat{\rho}_{F'}$ gemäß:

$$\hat{\rho}_{F'} = \left(\hat{A}_V^H \hat{R}_{nn,F'}^{-1} \hat{A}_V\right)^{-1} \hat{A}_V^H \hat{R}_{nn,F'}^{-1} \cdot x_{F'} \in C^K, \tag{31}$$

wobei die Koeffizienten von $\hat{\rho}_F$ die geschätzten Amplituden der $K$ Wellenfronten bezeichnen.
Bezüglich der Schätzung der Amplituden in dem Raum-Zeit-Bereich wird bemerkt, daß im allgemeinen eine höhere Genauigkeit erreicht wird, wenn man die Modellgleichung (4) in dem Raum-Zeit-Bereich löst. Die Verschlechterung durch eine ungenaue Schätzung der Frequenzen $\mu_k^{(1)}$, $\mu_k^{(2)}$ und $\mu_k^{(3)}$ ist nicht so bedeutend. Wenn der Vektor $s_{PN}(\mu_k^{(3)})$ die abgetasteten und zeitverzögerten PN-Sequenzen entsprechend der Verzögerung $\tau_k$ enthält, wobei $\mu_k^{(3)}$ $=-2\pi\frac{t_k}{T}$, kann Gleichung (4) geschrieben werden als

$$X = \sum_{k=1}^{K} \rho_k \, \mathbf{a}\left(\mu_k^{(1)}, \mu_k^{(2)},\right) s_{PN}\left(\mu_k^{(3)}\right)^T \qquad (32)$$

Mit $vec\{Y_1 Y_2 Y_3\}=(Y_3^T \otimes Y_1)vec\{Y_2\}$ entwickelt sich die Gleichung (32) zu

$$vec\{X\} = \sum_{k=1}^{K} \rho_k \left[ s_{PN}\left(\mu_k^{(3)}\right) \otimes \mathbf{a}\left(\mu_k^{(1)}, \mu_k^{(2)}\right) \right]. \qquad (33)$$

Der Operator $\otimes$ bezeichnet das Kronecker Produkt. Falls das Rauschen **n** nicht weiß ist, muß die Rauschkovarianzmatrix berücksichtigt werden. Im Gegensatz zu Gleichung (10) muß das Rauschen der kompletten Sequenz betrachtet werden, wenn die Rauschkovarianzmatrix berechnet wird in:

$$\mathbf{R}_{NN} = E\left\{vec\{N\}vec\{N\}^H\right\} \in C^{M_1 M_2 M_3 \times M_1 M_2 M_3}, \qquad (34)$$

wobei

$$N = \begin{bmatrix} \mathbf{n}[1] & \mathbf{n}[2] & \cdots & \mathbf{n}[N] \end{bmatrix} \in C^{M_1 M_2 \times M_3}.$$

Das Lösen von Gleichung (33) für $\rho_T$ führt zu den geschätzten Amplituden $\hat{\rho}_{T,1}$, $\hat{\rho}_{T,2}\cdots \hat{\rho}_{T,K}$.

$$\hat{\rho}_T = \left(\mathbf{B}^H \, \hat{\mathbf{R}}_{NN}^{-1} \, \mathbf{B}\right)^{-1} \mathbf{B}^H \, \hat{\mathbf{R}}_{NN}^{-1} \cdot vec\{X\}, \qquad (35)$$

wobei

$$\mathbf{B} = \left[ s_{PN}\left(\tau_1\right) \otimes \mathbf{a}\left(\mu_1^{(1)}, \mu_1^{(2)}\right) \quad s_{PN}\left(\tau_2\right) \otimes \mathbf{a}\left(\mu_2^{(1)}, \mu_2^{(2)}\right) \quad \cdots \quad s_{PN}\left(\tau_K\right) \otimes \mathbf{a}\left(\mu_K^{(1)}, \mu_K^{(2)}\right) \right].$$

Zu der praktischen technischen Realisierung sei zunächst wiederholt, daß in Abhängigkeit von Sende- und Empfangsposition der Funkkanal durch die Anzahl der am Empfänger eintreffenden Wellenfronten K sowie deren komplexe Amplituden $\rho_k$, Verzögerungen $\tau_k$ und Ankunftswinkel Azimuth $\phi_k$ und Elevation $\theta_k$ charakterisiert werden kann. Dabei sind die folgenden drei Schritte wesentlich:

Erzeugung und Aussendung des Sendesignals **s(t)** mit einer Testimpulsfolge.

Empfang durch ein zweidimensionales Antennenfeld, sodann Transformation ins Basisband durch Heruntermischen und Abtastung.

Digitale Signalverarbeitung mit einer Vorverarbeitung durch ein signalangepaßtes Filter, Transformation in den Raum-Frequenz-Bereich und Berücksichtigung der Pulsform mit entsprechenden Korrekturen. Schließlich Schätzung der Parameter, nämlich durch gemeinsame Parameterschätzung vorzugsweise mittels eines 3-D Unitary ESPRIT Verfahrens und einer gemeinsamen Schätzung der komplexen Amplituden.

Im folgenden werden diese Schritte noch näher erläutert.

**Erzeugung des Sendesignals**

Das Sendesignal

$$s'(t) = \sum_{i=0}^{P} c(t - iT) \quad \text{mit} \quad c(t) = \sum_{m=0}^{N_c-1} d_m p_c(t - mT_c) \tag{36}$$

besteht aus $P$+1 Pulsfolgen. Jede Pulsfolge **c(t)** wird durch eine Pseudo-Rausch-Sequenz $d_m$ der Länge $N_c$ moduliert. Die Bandbreite des Pulses richtet sich nach der Bandbreite des auszumessenden Funkkanals. Die Amplituden des Sendesignals

$$s'(t) = s(t) + A \text{ werden um } A = (1 - \sqrt{N_c+1})/N_c \tag{37}$$

verschoben, um dem geforderten Modell im Raum-Frequenz-Bereich zu entsprechen. Weiterhin wird $A$ so gewählt, daß das Signal/Rauschverhältnis beim Empfang optimiert wird, d.h. es wird ein signalangepaßtes Filter verwendet. Dieses Signal $s'(t)$ wird im Basisband erzeugt, in das auszumessende Hochfrequenzband gemischt und abgestrahlt.

**Empfang und Auswertung des Sendesignals Vorverarbeitung**

Signalangepaßtes Filter

Die Empfangseinrichtung umfaßt ein rechteckiges, zweidimensionales Antennenfeld aus $M_1 \times M_2$ Antennen, wobei Unitary ESPRIT ein zentrosymmetrisches Antennenfeld benötigt. Die empfangenen Signale werden in das Basisband heruntergemischt und mit einem ganzzahligen Vielfachen $M_c$ der Grundabtastrate $1/T_c$ abgetastet. Die abgetasteten Signale werden mit der Sequenz

$$c'\left(n \cdot \frac{T_c}{M_c}\right) = c\left(n \cdot \frac{T_c}{M_c}\right) + b\left(n \cdot \frac{T_c}{M_c}\right), \tag{38}$$

korreliert. Es gilt

$$b\left(n \cdot \frac{T_c}{M_c}\right) = \begin{cases} (1 + A) / (A \cdot N_c - 1), & 0 \leq n \prec N_c M_c \\ 0, & \text{sonst} \end{cases}$$

Hierdurch ergibt sich ein signalangepaßtes Filter MF, d.h. es gilt

$$c'\left(n \cdot \frac{T_c}{M_c}\right) = s'\left(-n \cdot \frac{T_c}{M_c}\right).$$

Werden in Verbindung mit (37) und (38) die gewählte Pulsform $p_c(t)$ berücksichtigt, siehe unten, so bewirkt jede Wellenfront eine zeitliche Invarianz im Raum-Frequenz-Bereich.

Berücksichtigung der Pulsform

Der Ausgang des signalangepaßten Filters $X_{MF}(i) \in C^{M_1 M_2 \times N_c M_c}$ wird in den Raum-Frequenz-Bereich transformiert,

$$X_F(i) = X_{MF}(i)W, \tag{39}$$

wobei $W \in C^{N_c M_c \times M_3}$ eine Matrix der diskreten Fouriertransformation (DFT) ist. Es werden nur die $M_3$ spektralen Linien berechnet, für die der Betrag der in den Frequenzbereich transformierten Kreuzkorrelationsfunktion der abgetasteten Folgen $c'(n)$ und $s'(n)$, $|R(l)|$, einen Grenzwert $T$ überschreitet. Der Einfluß der Pulsform und des Überabtastens wird im Raum-Frequenz aus $X_F$ herausgerechnet, indem

$$\mathbf{F} = diag\left\{ R\left(N_c M_c - \frac{M_3 - 1}{2}\right), \ldots, R(N_c M_c - 1), R(0), R(1), \ldots, R\left(\frac{M_3 - 1}{2}\right) \right\}$$

in

$$X_{F'}(i) = X_F(i)\mathbf{F}^{-1} \tag{40}$$

eingesetzt wird. In der Zeichnung ist lediglich die Matrix $X_F$ dargestellt. Die Berücksichtigung der Chip-Signalform führt dann zu der Matrix $X_{F'}$. Hiermit haben die Zeilen der Matrix $X_{F'}(i)$ im Raum-Frequenz-Bereich pro Wellenfront eine Invarianz in zeitlicher Richtung (unabhängig von der Pulsform $p_c$ und dem Überabtastfaktor $M_c$). Die $P$ Sequenzen im Raum-Frequenz-Bereich

$$x_{F'}(i) = vec\left\{ X_{F'}(i) \right\}$$

werden zusammengefaßt,

$$X_{F'} = [x_{F'}(1)\ x_{F'}(2)\ \ldots\ x_{F'}(P)],$$

und geglättet

$$\mathbf{X}_{sub} = \left[ \mathbf{J}_{1,1,1} \mathbf{X}_{F'} \quad \mathbf{J}_{1,1,2} \mathbf{X}_{F'} \quad \cdots \quad \mathbf{J}_{1,1,L_3} \mathbf{X}_{F'} \quad \mathbf{J}_{1,2,1} \mathbf{X}_{F'} \quad \cdots \quad \mathbf{J}_{L_1,L_2,L_3} \mathbf{X}_{F'} \right] \in C^{M_{sub} \times LP}. \tag{41}$$

Durch die Glättung werden korrelierte Wellenfronten dekorreliert und die Dimension der Signalkovarianzmatrix

$$R_{xx} = \frac{1}{LP} \cdot X_{sub} X_{sub}^H \in C^{M_{sub} \times M_{sub}} \tag{42}$$

reduziert, d.h. $M_{sub} < M$. Dies führt bei der Eigenwertzerlegung in (43) zu reduziertem Rechenaufwand. Die Rauschkovarianzmatrix $R_{nn}$ kann Off-Line berechnet werden. Auch wenn das am Antennenfeld anliegende Rauschen in räumlicher und zeitlicher Richtung unkorreliert ist, ist das Rauschen im Frequenzbereich oftmals nicht zeitlich unkorreliert. In diesem Fall ist $R_{nn}$ keine skalierte Diagonalmatrix.

**Parameterschätzung**

3-D Unitay ESPRIT unter Berücksichtigung von farbigem Rauschen

Die komplexen Kovarianzmatrizen $R_{xx}$ und $R_{nn}$ werden gemäß (23) in reelle Matrizen $G_{xx}$ und $G_{nn}$ transformiert. Eine verallgemeinerte Eigenwertzerlegung

$$G_{xx}E = G_{nn}E \cdot \Sigma \qquad \text{mit} \qquad \Sigma = diag\{\sigma_i\}_{i=1}^{M_{sub}}, \qquad (43)$$

liefert $E \in C^{M_{sub} \times M_{sub}}$. Die Spalten von $E_s$ bestehen aus dominanten, verallgemeinerten Eigenvektoren, d.h. den Spalten von E, die zu den $K'$ dominanten (größten) verallgemeinerten Eigenwerten $\sigma_k$ gehören. Diese Spalten von $E_s$ spannen den geschätzten Unterraum auf, wobei $K'$ die Anzahl der dominanten Wellenfronten bezeichnet. Mit der Unterraumschätzung $E_s$ werden drei Invarianzgleichungen,

$$K_{(r)_1}G_{nn}E_s\, Y_r \approx K'_{(r)2}G_{nn}E_s \in R^{m_r \times K'}, \qquad r = 1,2,3, \qquad (44)$$

aufgestellt und z.B. mit Hilfe des Verfahrens der kleinsten Quadrate nach $Y_r$ aufgelöst. Die gesuchten räumlichen und zeitlichen Frequenzen

$$\mu_k^{(1)} = \frac{2\pi\Delta_x}{\lambda}u_k \qquad \mu_k^{(2)} = \frac{2\pi\Delta_y}{\lambda}v_k \qquad \mu_k^{(3)} = -2\pi\, \frac{\tau_k}{T} \qquad (45)$$

lassen sich durch eine gleichzeitige Schur-Zerlegung (Simultaneous Schur Decomposition) der drei Matrizen $Y_r$ ermitteln. Aus den räumlichen Frequenzen $\mu_k^{(1)}$ und $\mu_k^{(2)}$ ergeben sich mit $\upsilon_k = \cos\phi_k\sin\theta_k$ und $v_k = \sin\phi_k \sin\theta_k$ die gesuchten Einfallswinkel (Azimuth $\phi_k$ und Elevation $\theta_k$) und aus den zeitlichen Frequenzen $\mu_k^{(3)}$ die Verzögerungen $\tau_k$ der einzelnen Wellenfronten.

Gemeinsame Schätzung der komplexen Amplituden

Um die komplexen Amplituden zu schätzen, wird die Signalmatrix $S \in C^{K' \times QN_cM_c}$ aus den Verzögerungen $\tau_k$ und die Steuermatrix $A_a \in C^{M_1M_2 \times K'}$ aus den räumlichen Frequenzen $\mu_k^{(1)}$ und $\mu_k^{(2)}$ konstruiert. Die komplexen Amplituden

$$\hat{\xi} = \left(\mathbf{B}^H \mathbf{R}_{NN}^{-1}\mathbf{B}\right)^{-1} \mathbf{B}^H \mathbf{R}_{NN}^{-1} \cdot vec\{\mathbf{X}\} \quad \text{mit} \quad \mathbf{B} = \mathbf{S}^T \,\Diamond\, \mathbf{A}_a \qquad (46)$$

werden über $Q \leq P$ Sequenzen im Raum-Zeit-Bereich geschätzt. $R_{NN}$ ist die geschätzte Rauschkovarianzmatrix im Zeitbereich.

Sämtliche Verfahrensschritte lassen sich unter Verwendung von Signalprozessoren, wie sie aus der digitalen Empfängertechnik bekannt sind, in einer Meßanordnung realisieren, die aus einer ebenen, vorzugsweise rechteckigen Antennengruppe sowie aus einem Meßempfänger mit entsprechenden Empfängerstufen verwirklichen.

Zusammenfassend lassen sich die Vorteile gegenüber den bekannten Verfahren wie folgt angeben:

Es erfolgt eine Maximierung des Signal/Rauschverhältnisses durch Veränderung der Sende- und Korrelationsequenz, unter Einhaltung der zeitlichen Invarianzbeziehung, die Pulsform im Raum-Frequenz-Bereich wird berücksichtigt, es ist eine beliebige Wahl der Pulsform und ein beliebiger ganzzahliger Abtastfaktor möglich, eine Eliminierung der schwachen spektralen Linien führt zu einem reduzierten Einfluß des Rauschens und reduziert den Rechenaufwand, eine hochauflösende gemeinsame Schätzung von Azimuth, Elevation und Verzögerung ist durch Einsatz des 3-D Unitary Esprit Verfahrens und durch Transformation in den Raum-Frequenz-Bereich über $P$ Sequenzen möglich, ebenso eine Erweiterung des 3-D Unitary ESPRIT Verfahrens zur Berücksichtigung des farbigen Rauschens im Raum-Frequenz-Bereich und die gemeinsame Schätzung der Amplituden im Raum-Zeit-Bereich über $Q$ Sequenzen ist möglich.

**Patentansprüche**

1. Verfahren zur Messung der Eigenschaften von Funkkanälen, bei dem

   - Empfangssignale von einer Anzahl ($M_3$) von Empfangssensoren (S1-S4) einer zweidimensionalen Antennengruppe (URA) empfangen werden, wobei sich die jeweiligen Empfangssignale aus Teilwellen eines Sendesignals hinsichtlich Azimuth ($\phi_k$) und Elevation ($\theta_k$) unterschiedlicher Einfallsrichtung und unterschiedlicher Verzögerung zusammensetzen,

   **dadurch gekennzeichnet, daß**

   - das Sendesignal eine vorgewählte Testsequenz enthält,
   - die Empfangssignale demoduliert werden und anschließend eine Abtastung erfolgt,
   - sich ergebende Abtastwerte bei einer Berechnung von Eigenvektoren, die mit dominanten Eigenwerten korrespondieren, zugeführt werden, wobei aus den berechneten Eigenvektoren eine Signalunterraummatrix abgeleitet wird,
   - von der Signalunterraummatrix abhängige Invarianzgleichungen aufgestellt werden,
   - Schätzwerte für Einfallswinkel und Verzögerungen von dominanten Wellenfronten durch Lösung der Invarianzgleichungen gleichzeitig ermittelt werden.

2. Verfahren nach Anspruch 1,
   **dadurch gekennzeichnet, daß** die Testsequenz eine Chip-Signalform aufweist, und daß die Schätzwerte unter Berücksichtigung der Chip-Signalform ermittelt werden.

3. Verfahren nach Anspruch 2,
   **dadurch gekennzeichnet, daß** die Abtastung mit einer Anzahl $M_C$ von Abtastwerten je Chip der Testsequenz erfolgt.

4. Verfahren nach einem der Ansprüche 1 bis 3,
   **dadurch gekennzeichnet, daß** die Abtastwerte durch diskrete Fouriertransformation in den Frequenzbereich transformiert werden.

5. Verfahren nach Anspruch 2 oder 3,
   **dadurch gekennzeichnet, daß** die Abtastwerte unter Berücksichtigung des Spektrums der Chip-Signalform der Testsequenz korrigiert werden, wobei die aus den korrigierten Abtastwerten für die Empfangssensoren gebildeten Zeilenvektoren zu einer Datenmatrix($X_{F}(n)$) zusammensetzbar sind, welche den Kanal charakterisierende Invarianzen enthält.

6. Verfahren nach einem der Ansprüche 1 bis 5,
   **dadurch gekennzeichnet, daß** für das Sendesignal eine modulierte Pseudo-Rausch-Sequenz ausgewählt wird.

7. Verfahren nach einem der Ansprüche 1 bis 6,
   **dadurch gekennzeichnet, daß** die Empfangssignale der Empfangssensoren (S1-S4) vor dem Demodulieren in das Basisband gemischt werden.

8. Verfahren nach einem der Ansprüche 1 bis 7,
   **dadurch gekennzeichnet, daß** die Abtastwerte signalangepaßt gefiltert werden.

9. Verfahren nach einem der Ansprüche 1 bis 8,
   **dadurch gekennzeichnet, daß** die Empfangssignale mit einer Abtastfrequenz abgetastet werden, die größer als die doppelte Empfangssignalbandbreite ist.

10. Verfahren nach einem der Ansprüche 1 bis 9,
    **dadurch gekennzeichnet, daß** nach Transformation der Abtastwerte in den Frequenzbereich unter einer vorgebbaren Leistungsgrenze liegende Abtastwerte verworfen werden.

11. Verfahren nach einem der Ansprüche 3 bis 5,
    **dadurch gekennzeichnet, daß** die Abtastwerte nach Transformation in den Frequenzbereich durch Teilung durch das quadratische Spektrum der Chip-Signalform der Testsequenz korrigiert werden.

**12.** Verfahren nach einem der Ansprüche 1 bis 11,
**dadurch gekennzeichnet, daß** die Abtastwerte im Raum-Frequenz-Bereich einer Glättung unterworfen werden.

**13.** Verfahren nach einem der Ansprüche 1 bis 12,
**dadurch gekennzeichnet, daß** die Ermittlung und Zuordnung von sich überlagernden räumlichen und zeitlichen Invarianzen mit Hilfe eines dreidimensionalen, hochauflösenden Frequenzschätzalgorithmus im Raum-Frequenz-Bereich durchgeführt wird.

**14.** Verfahren nach Anspruch 13,
**dadurch gekennzeichnet, daß** in dem dreidimensionalen, hochauflösenden Frequenzschätzalgorithmus das farbige Rauschen im Raum-Frequenz-Bereich berücksichtigt wird.

**15.** Verfahren nach Anspruch 13 oder 14,
**dadurch gekennzeichnet, daß** zur Paarung der Schätzwerte eine gleichzeitige Schur-Zerlegung der drei Matrizen, aus deren Eigenwerten die dreidimensionalen Frequenzschätzwerte gewonnen werden, durchgeführt wird.

**16.** Verfahren nach Anspruch 14 oder 15,
**dadurch gekennzeichnet, daß** als Frequenzschätzalgorithmus das 3-D Unitary ESPRIT-Verfahren ausgewählt wird.

**17.** Verfahren nach einem der Ansprüche 1 bis 16,
**dadurch gekennzeichnet, daß** komplexe Amplituden gemeinsam im Raum-Frequenz-Bereich und/oder im Raum-Zeit-Bereich geschätzt werden.

**18.** Verfahren nach Anspruch 17,
**dadurch gekennzeichnet, daß** die gemeinsame Schätzung nach dem Gewichtete-Kleinste-Quadrate-Verfahren durchgeführt wird.

**19.** Meßanordnung zur Messung der Eigenschaften von Funkkanälen mit

- einer ebenen Antennengruppe (ULA),
- einer Anzahl ($M_3$) von Empfangssensoren (S1-SM),

wobei einem Empfangssensor

- eine Analog-Digital-Abtastungeinrichtung,
- ein signalangepaßtes Filter sowie
- eine Einrichtung zur diskreten Fouriertransformation nachgeordnet ist und zur Realisierung von Empfangseinrichtungen zumindest ein Signalprozessor vorhanden ist, in dem das Verfahren nach einem der Ansprüche 1 bis 18 angewendet wird.

**Claims**

**1.** Method for measuring the characteristics of radio channels, in which

- received signals are received by a number of ($M_3$) receiving sensors (S1-S4) in a two-dimensional antenna array (URA), with the respective received signals being composed of wave elements of a transmitted signal with regard to the azimuth ($\phi_k$) and elevation ($\theta_k$) of different incidence direction and different delay,

**characterized in that**

- the transmitted signal contains a preselected test sequence,
- the received signals are demodulated and sampling is then carried out,
- the resultant samples are used for calculation of eigen values which correspond to dominant eigen values, with a signal subspace matrix being derived from the calculated eigen vectors,

- invariance equations which are dependent on the signal subspace matrix being produced,
- estimated values for the incidence angle and delays of dominant wave fronts being determined simultaneously by solving the invariance equations.

2. Method according to Claim 1, **characterized in that** the test sequence has a chip signal form, and **in that** the estimated values are determined taking account of the chip signal form.

3. Method according to Claim 2,
**characterized in that** the sampling is carried out with a total of $M_c$ samples per chip of the test sequence.

4. Method according to one of Claims 1 to 3,
**characterized in that** the samples are transformed to the frequency domain by discrete Fourier transformation.

5. Method according to Claim 2 or 3,
**characterized in that** the samples are corrected taking account of the spectrum of the chip signal form in the test sequence, in which case the line vectors formed from the corrected samples for the receiving sensors can be combined to form a data matrix ($X_F(n)$) which contains invariances which characterize the channel.

6. Method according to one of Claims 1 to 5,
**characterized in that** a modulated pseudo-random noise sequence is chosen for the transmitted signal.

7. Method according to one of Claims 1 to 6,
**characterized in that** the signals received by the receiving sensors (S1-S4) are mixed before being demodulated to baseband.

8. Method according to one of Claims 1 to 7,
**characterized in that** the samples are filtered, matched to the signal.

9. Method according to one of Claims 1 to 8,
**characterized in that** the received signals are sampled at a sampling frequency which is greater than twice the received signal bandwidth.

10. Method according to one of Claims 1 to 9,
**characterized in that** once the samples have been transformed to the frequency domain, samples below a power limit which can be predetermined are rejected.

11. Method according to one of Claims 3 to 5,
**characterized in that**, once they have been transformed to the frequency domain, the samples are corrected by division by the square of the spectrum of the chip signal form of the test sequence.

12. Method according to one of Claims 1 to 11,
**characterized in that** the samples are subjected to smoothing in the space/frequency domain.

13. Method according to one of Claims 1 to 12,
**characterized in that** the determination and association of the superimposed, spatial and time invariances are carried out with the aid of a three-dimensional, high-resolution frequency estimation algorithm in the space/frequency domain.

14. Method according to Claim 13, **characterized in that** the coloured noise in the space/frequency domain is taken into account in the three-dimensional, high-resolution frequency estimation algorithm.

15. Method according to Claim 13 or 14,
**characterized in that** in order to pair the estimated values, the three matrices from whose eigen values the three-dimensional frequency estimated values are obtained are subjected to simultaneous Schur decomposition.

16. Method according to Claim 14 or 15,
**characterized in that** the 3D unitary ESPRIT method is selected as the frequency estimation algorithm.

**17.** Method according to one of Claims 1 to 16,
**characterized in that** complex amplitudes are estimated jointly in the space/frequency domain and/or in the space/ time domain.

**18.** Method according to Claim 17, **characterized in that** the joint estimation is carried out using the weighted least squares method.

**19.** Measurement arrangement for measuring the characteristics of radio channels, having

- a planar antenna array (ULA),
- a total of ($M_3$) receiving sensors (S1-SM),

in which case a receiving sensor is followed by

- an analog/digital sampling device,
- a matched filter and
- a device for discrete Fourier transformation, and there is at least one signal processor for the receiving devices, in which signal processor the method according to one of Claims 1 to 18 is used.

**Revendications**

**1.** Procédé pour la mesure des caractéristiques de canaux radio, dans lequel

- des signaux reçus sont reçus par un certain nombre ($M_3$) de capteurs de réception (S1 à S4) d'un réseau d'antennes bidimensionnel (URA), les signaux reçus respectifs étant composés d'ondes partielles d'un signal émis ayant des directions d'incidence différentes quant à l'azimut ($\phi_k$) et à l'élévation ($\theta_k$) et ayant des retards différents,

**caractérisé par le fait que**

- le signal émis contient une séquence de test sélectionnée au préalable,
- on démodule les signaux reçus et on effectue ensuite un échantillonnage,
- on envoie des valeurs échantillonnées résultantes à un calcul de vecteurs propres qui correspondent à des valeurs propres dominantes, une matrice de sous-espace de signal étant déduite des vecteurs propres calculés,
- on pose des équations d'invariance dépendantes de la matrice de sous-espace de signal,
- on détermine simultanément des valeurs estimées pour des angles d'incidence et des retards de fronts d'ondes dominants en résolvant les équations d'invariance.

**2.** Procédé selon la revendication 1,
**caractérisé par le fait que** la séquence de test a une forme de signal dite chip et qu'on détermine les valeurs estimées en tenant compte de la forme de signal chip.

**3.** Procédé selon la revendication 2,
**caractérisé par le fait que** l'échantillonnage s'effectue avec un nombre $M_C$ de valeurs échantillonnées par chip de la séquence de test.

**4.** Procédé selon l'une des revendications 1 à 3,
**caractérisé par le fait qu'**on transforme les valeurs échantillonnées dans le domaine fréquentiel au moyen d'une transformation de Fourier discrète.

**5.** Procédé selon la revendication 2 ou 3,
**caractérisé par le fait qu'**on corrige les valeurs échantillonnées en tenant compte du spectre de la forme de signal chip de la séquence de test, les vecteurs lignes formés à partir des valeurs échantillonnées corrigées pour les capteurs de réception pouvant être réunis en une matrice de données ($X_{F'}(n)$) qui contient des invariances caractérisant le canal.

**6.** Procédé selon l'une des revendications 1 à 5,
**caractérisé par le fait qu'**on choisit pour le signal émis une séquence de pseudobruit modulée.

**7.** Procédé selon l'une des revendications 1 à 6,
**caractérisé par le fait qu'**on mélange les signaux reçus des capteurs de réception (S1 à S4), avant la démodulation, dans la bande de base.

**8.** Procédé selon l'une des revendications 1 à 7,
**caractérisé par le fait qu'**on filtre les valeurs échantillonnées selon un filtrage adapté au signal.

**9.** Procédé selon l'une des revendications 1 à 8,
**caractérisé par le fait qu'**on échantillonne les signaux reçus avec une fréquence d'échantillonnage qui est supérieure au double de la largeur de bande du signal reçu.

**10.** Procédé selon l'une des revendications 1 à 9,
**caractérisé par le fait que**, après la transformation des valeurs échantillonnées dans le domaine fréquentiel, on rejette des valeurs échantillonnées se trouvant en dessous d'une limite de puissance pouvant être prescrite.

**11.** Procédé selon l'une des revendications 3 à 5,
**caractérisé par le fait qu'**on corrige les valeurs échantillonnées, après la transformation dans le domaine fréquentiel, par une division par le spectre quadratique de la forme de signal chip de la séquence de test.

**12.** Procédé selon l'une des revendications 1 à 11,
**caractérisé par le fait qu'**on soumet les valeurs échantillonnées dans le domaine espace-fréquence à un lissage.

**13.** Procédé selon l'une des revendications 1 à 12,
**caractérisé par le fait qu'**on effectue dans le domaine espace-fréquence la détermination et l'association d'invariances spatiales et temporelles se superposant à l'aide d'un algorithme d'estimation de fréquence tridimensionnel à haute résolution.

**14.** Procédé selon la revendication 13,
**caractérisé par le fait que**, dans l'algorithme d'estimation de fréquence tridimensionnel à haute résolution, on prend en compte le bruit coloré dans le domaine espace-fréquence.

**15.** Procédé selon la revendication 13 ou 14,
**caractérisé par le fait que**, pour apparier les valeurs estimées, on effectue une décomposition de Schur simultanée des trois matrices à partir des valeurs propres desquelles les valeurs estimées de fréquences tridimensionnelles sont obtenues.

**16.** Procédé selon la revendication 14 ou 15,
**caractérisé par le fait qu'**on sélectionne comme algorithme d'estimation de fréquences le procédé 3-D Unitary ESPRIT.

**17.** Procédé selon l'une des revendications 1 à 16,
**caractérisé par le fait qu'**on estime des amplitudes complexes en commun dans le domaine espace-fréquence et/ou dans le domaine espace-temps.

**18.** Procédé selon la revendication 17,
**caractérisé par le fait qu'**on effectue l'estimation commune selon le procédé des moindres carrés pondérés.

**19.** Dispositif de mesure pour la mesure des caractéristiques de canaux radio, comportant

- un réseau d'antennes plan (ULA),
- un certain nombre ($M_3$) de capteurs de réception (S1 à SM),

dans lequel il est agencé du côté aval d'un capteur de réception

- un dispositif d'échantillonnage analogique-numérique,
- un filtre adapté au signal et
- un dispositif pour la transformation de Fourier discrète,

et dans lequel il existe pour la réalisation de dispositifs récepteurs au moins un processeur de signal dans lequel le procédé selon l'une des revendications 1 à 18 est utilisé.

Fig. 1

Fig. 2